# EUROPEAN PATENT APPLICATION

(11) **EP 2 365 045 A1**
(43) Date of publication of application: **14.09.2011**
(21) Application number: 11156197.3
(22) Date of filing: 28.02.2011
(51) Int. Cl.: C09J 7/02, C09J 11/08, C09J 123/12

(54) **Protective Sheet and Use Thereof**

(30) Priority: 01.03.2010 JP 2010043984
(71) Applicant: Nitto Denko Corporation, Ibaraki-shi, Osaka 567-8680 (JP)
(72) Inventor: Hayata, Maiko, Ibaraki-shi Osaka 567-8680 (JP); Inoue, Tsuyoshi, Ibaraki-shi Osaka 567-8680 (JP); Yamamoto, Mitsushi, Ibaraki-shi Osaka 567-8680 (JP)
(74) Representative: Grünecker, Kinkeldey, Stockmair & Schwanhäusser Anwaltssozietät

(57) **Abstract**

A protective sheet (for example, a protective sheet for masking during plating) is provided that has an excellent balance of adherence to the surface of an adherend and easy releasability when heat and pressure bonded. The protective sheet includes a substrate and a pressure-sensitive adhesive (PSA) layer which is provided on one side of the substrate. The PSA layer is thermoplastic. When the protective sheet is pressure bonded to a polyimide film at a temperature of 120°C and a pressure of 0.34 MPa for a pressing time of 5 seconds, the protective sheet has a peel strength PS_{HP}, as measured by peeling the protective sheet from the polyimide film at a temperature of 25°C, a peel rate of 5 m/min and a peel angle of 180º, of from 0.05 N/10 mm to 1.0 N/10 mm.

## Description

### CROSS-REFERENCE

This application claims priority to Japanese Patent Application No. 2010-043984 filed on March 1, 2010, the entire contents of which are incorporated herein by reference.

### BACKGROUND OF THE INVENTION

### 1. Field of the Invention

The present invention relates to a protective sheet, and relates more particularly to a protective masking sheet that protects non-plating areas from the plating solution during metal plating.

### 2. Description of the Related Art

A process which is used for partially plating connection terminals and the like on circuit boards (e.g., printed circuit boards, flexible printed circuit boards (FPC)) involves attaching a pressure-sensitive adhesive (PSA) sheet to areas that are not to be plated (non-plating areas), and carrying out plating treatment in a state where such areas are protected from the plating solution. PSA sheets (protective sheets for masking during plating) used in this manner are typically constructed of a substrate which is a plastic film impermeable to the plating solution, and a PSA layer provided on one side of the substrate. An example of the technical literature relating to such protective sheets is Japanese Patent Application Publication No. 2004-115591. Other technical literature relating to protective sheets includes Japanese Patent Application Publication No. 2008-208173. In addition, other technical literature relating to PSA sheets includes Japanese Patent Application Publication Nos. 2004-137436 (about a double-sided adhesive tape) and 2005-203749 (about a tape for wafer processing).

A fine, complex topography owing to already formed circuits and the like may be present on the surface of a circuit board like that described above. To prevent infiltration of the plating solution from the outer edges of the sheet to non-plating areas, a protective sheet for covering the non-plating areas of such circuit board surfaces (a protective sheet for masking during plating) is required to have the quality of conforming to the surface shape of the non-plating areas and closely adhering thereto without lifting or peeling ("surface conformability," or "adherence") and the quality of being peelable from the circuit board surface without damaging the complex surface shape ("easy releasability"). When one of these two properties is increased, the other tends to decline. However, to enhance circuit board productivity, there exists a need for a protective sheet which achieves both of these properties at a higher level and in a good balance.

### SUMMARY OF THE INVENTION

It is therefore an object of the invention to provide a protective sheet (e.g., a protective sheet for masking during plating) endowed with an excellent balance between adherence to the adherend surface and easy releasability.

Accordingly, the invention provides a protective sheet having a substrate and a PSA layer which is provided on one side of the substrate. The PSA layer is thermoplastic. When the protective sheet is pressure bonded to a 50 µm thick polyimide (PI) film at a temperature of 120°C and a pressure of 0.34 MPa for a pressing time of 5 seconds, the protective sheet has a peel strength PS_{HP}, as measured by peeling the protective sheet from the PI film at a temperature of 25°C, a peel rate of 5 m/min and a peel angle of 180°, of from 0.05 N/10 mm to 1.0 N/10 mm. Because this protective sheet (e.g., a protective sheet for masking during plating) has a thermoplastic PSA layer and the PS_{HP} is in the above range, it is capable of achieving an excellent balance between adherence and easy releasability when heat and pressure bonded.

In one aspect of the protective sheet disclosed herein, the PSA layer includes, as a primary component, a thermoplastic polymer and includes also an adhesiveness modifier. With such a protective sheet, the adherence and easy releasability (and preferably also the subsequently described temporary attachability) can be achieved at a higher level and in a good balance. The PSA layer preferably includes, as the thermoplastic polymer serving as the primary component, a propylene elastomer. The above adhesiveness modifier is preferably a nonionic surfactant.

In another aspect, when the above protective sheet is placed on an evaluation adherend in a 25°C environment, lightly bonded thereto (temporarily attached thereto) by passing an 83 g hand roller once back and forth over the protective sheet, and then held at 25°C for one hour, the above protective sheet has a peel strength PS₁, as measured by peeling the protective sheet in the lengthwise direction from the adherend at a peel rate of 300 m/min and a peel angle of 180°, of from 0.03 N/10 mm to 1.0 N/10 mm. This protective sheet, when disposed at a predetermined position, for example, is capable of having an excellent handleability (ease of re-attachment during positioning; also referred to below as "temporary attachability"). A protective sheet having such an excellent temporary attachability, because it bonds easily to the surface of a circuit board at a very light pressure and can be easily reattached, is particularly well-suited for use as a protective sheet in circumstances where such adjustments in position may be carried out (such as a protective sheet for masking during plating).

Any of the protective sheets disclosed herein is suitable as a protective masking sheet which is attached to non-plating areas during plating with a metal and protects such areas from the plating solution. These protective masking sheets may be used, for example, in a process for partially plating connection terminals on a circuit board.

### BRIEF DESCRIPTION OF THE DRAWINGS

FIG. 1 is a schematic cross-sectional diagram of an embodiment of the protective sheet according to the present invention;
FIG. 2 is a schematic cross-sectional diagram of another embodiment of the protective sheet of the present invention;
FIG. 3 is a front view illustrating a method for evaluating adherence; and
FIG. 4 is a cross-sectional view taken along line IV-IV in FIG. 3.

### DETAILED DESCRIPTION OF THE INVENTION

Preferred embodiments of the present invention are described below. Technical matters necessary to practice the invention, other than those specifically referred to in the present description, may be understood as design matters for a person skilled in the art that are based on the related art in the pertinent field. The present invention may be practiced based on the contents disclosed herein and common general technical knowledge in the pertinent field.

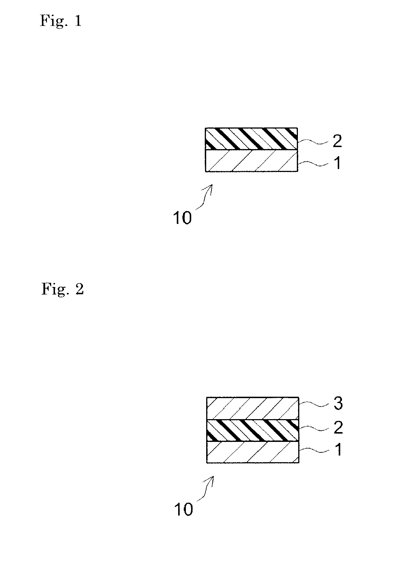

A protective sheet disclosed herein has a substrate, and a PSA layer which is provided on one side of the substrate. FIG. 1 schematically shows a typical construction of the protective sheet provided by the present invention. This protective sheet 10, which has a sheet-shaped substrate 1 made of plastic and a PSA layer 2 provided on a first side (one side) thereof, is used by attaching the PSA layer 2 to given places (areas to be protected, e.g., in the case of protective sheets for masking during plating, non-plating areas) on an adherend. The protective sheet 10 prior to use (that is, prior to attachment to the adherend) may typically be in a form where, as shown in FIG. 2, the surface (attaching side) of the PSA layer 2 is protected by a release liner 3 having a release face (release side) on at least the PSA layer 2 side thereof. Alternatively, the protective sheet 10 may have a construction wherein the second side of the substrate 1 (the back side from the side where the PSA layer 2 is provided) is a release side and, by coiling the protective sheet 10 into a roll, the second side comes into direct contact with the PSA layer 2 in such a way as to protect the surface thereof.

The protective sheet disclosed herein has a peel strength when peeled from PI film to which it has been heat and pressure bonded (adhesive strength when heat and pressure bonded) PS_{HP} of from 0.05 N/10 mm to 1.0 N/10 mm (and preferably from 0.1 N/10 mm to 0.8 N/10 mm). If the PS_{HP} is too high, the easy releasability after heat and pressure bonding may decrease. On the other hand, if the PS_{HP} is too low, sufficient adhesion may not be achieved even when heat and pressure bonded. For example, on the surface of an ordinary circuit board prior to plating, generally there is a large portion of place where the PI board is exposed. Because a protective sheet with a PS_{HP} in the above range has an excellent balance between adhesion when it has been heat and pressure bonded to polyimide and easy releasability, it is well-suited for use in protecting non-plating areas during the plating of a circuit board. The values measured as described below are employed as the above adhesive strength PS_{HP} when heat and pressure bonded.

### Measurement of Adhesive Strength PS_{HP} When Heat and Pressure Bonded

A PSA layer exposed by removing the release liner from a protective sheet cut to a size of 10 mm x 60 mm with the machine direction (sometimes abbreviated below as "MD"; typically the lengthwise direction of the substrate) of the substrate serving as the lengthwise direction is placed over a PI film cut to a size of 15 mm x 60 mm as the adherend and temporarily attached thereto solely under the weight of an 83 g hand roller by passing the roller once back and forth over the sheet. This is then sandwiched between two layers of a suitable rubber sheet and pressed from above the rubber sheet (on the protective sheet side) at a temperature of 120°C and a pressure of 0.34 MPa for a pressing time of 5 seconds, thereby heat and pressure bonding the protective sheet to the adherend. At this time, in order to keep the molten PSA from sticking to the rubber sheet, it is desirable to place, both between the protective sheet and the rubber sheet and also between the adherend and the rubber sheet, a PET film or the like that has been release-treated with silicone or the like. The adherend to which the protective sheet has been heat and pressure bonded is then attached to a stainless steel plate (SUS 430BA) using double-sided PSA tape, following which the protective sheet is peeled from the adherend that has been attached to the steel plate at a temperature of 25°C, a peel rate of 5 m/min and a peel angle of 180° in accordance with JIS Z0237, and the peel strength at that time is measured as the adhesive strength PS_{HP} (N/10 mm) when heat and pressure bonded. The PI film used here may be the product available from Toray Industries, Inc. under the trade name "Kapton 200H," or an equivalent product. The double-sided PSA tape may be the product available from Nitto Denko Corporation as "No. 532," or an equivalent product. In the PS_{I-}IP measurement described above, assuming use as a protective sheet employed when plating a flexible printed circuit board (i.e., as a protective sheet for masking during plating) and taking into account the fact that most flexible printed circuit board surfaces are polyimide, a PI film (available from Toray Industries, Inc. under the trade name "Kapton 200H") is used as the adherend.

It is preferable for the protective sheet disclosed herein to have a peel strength when temporarily attached (initial adhesive strength) PS_{I} of from 0.03 N/10 mm to 1.0 N/10 mm. If the PS₁ is too high, the adhesive strength increases, which may lower the ease of use during re-attachment of the protective sheet. On the other hand, if the PS₁ is too low, the adhesive strength may be inadequate, as a result of which the protective sheet may shift or peel away from the position where it has been temporarily attached. The value measured as described below is used as the initial adhesive strength PS₁.

### Measurement of Initial Adhesive Strength PS_{I}

A protective sheet cut to a size of 10 mm x 60 mm with the machine direction of the substrate serving as the lengthwise direction is placed on the PSA layer of an evaluation adherend cut to a size of 15 mm x 60 mm in a 25°C environment and lightly bonded (temporarily attached) thereto solely under the weight of an 83 g hand roller by passing the roller once back and forth over the sheet. This is held at 25°C for one hour, following which it is peeled in the lengthwise direction from the adherend at a temperature of 25°C, a peel rate of 300 m/min and a peel angle of 180° in accordance with JIS Z0237, and the peel strength PS_{I} (N/10 mm) at that time is measured.
The evaluation adherend for measuring PS_{I}, assuming a case in which a protective sheet is temporarily attached to the FPC surface where an adhesive layer that had fixed a copper foil to the FPC lies exposed after the copper foil has been etched out (surface of PI board after etching out), is a PI board having a PSA surface similar to the FPC surface. The evaluation adherend used here is one obtained by providing a PSA layer having a thickness of 25 µm which includes 100 parts by weight of an alkyl acrylate-acrylonitrile-acrylic copolymer (available from Toray Coatex Co., Ltd. under the trade name "Rheocoat R-7000"), 30 parts by weight of a bisphenol A-based solid epoxy resin (available from Japan Epoxy Resin Co., Ltd. under the trade name "jER 1001 ") and 30 parts by weight of a phenolic resin (available from Sumitomo Bakelite Co., Ltd. under the trade name Sumilite Resin PR-51283") on one side of a PI film (available from DuPont-Toray Co., Ltd. under the trade name "Kapton 200H").

The protective sheet disclosed herein includes, on one side of a substrate, a PSA layer having thermoplastic properties (flowability when heated). This protective sheet is capable of exhibiting excellent adherence to the surface of an adherend because, when suitable degrees of heat and pressure are applied thereto after the sheet has been attached to an adherend, the PSA melts and conforms to the surface topography of the adherend.

It is preferable for the PSA layer to include, as a primary component, a thermoplastic polymer (i.e., as the base polymer, typically accounting for at least 50 wt% of the adhesive components), and to include also an adhesiveness modifier. For example, it is desirable to suitably select the type and amount of thermoplastic polymer included so as to set the melt mass flow rate (MFR) of the PSA making up the PSA layer to from about 5 g/10 min to about 30 g/10 min (preferably from about 5 g/10 min to about 20 g/10 min, and more preferably from about 10 g/10 min to about 20 g/10 min). Alternatively, the polymer components may be composed substantially of only a thermoplastic polymer (which may be of one, two or more types) having such a MFR. The value employed as the MFR is measured in accordance with ASTM D1238, test method A, at 230°C and under a load of 2.16 kg. These thermoplastic polymers may be used singly or as a combination of two or more thereof. For example use may be made of polymers having thermoplastic properties, such as polypropylene (PP), polyethylene (PE), phenoxy resins (FX), ethylene-vinyl acetate resins (EVA), ethylene-methyl methacrylate copolymers (EMMA), styrene-isoprene-styrene block copolymers (SIS), styrene-butadiene-styrene block copolymers (SBS), styrene-ethylenebutylene-styrene block copolymers (SEBS) and styrene-ethylene-propylene-styrene block copolymers (SEPS).

The thermoplastic polymer may be either a non-crystalline polymer or a semi-crystalline polymer. Alternatively, these may be blended in desired proportions and used together. Preferably, the primary component (accounting for at least 50 wt%, and preferably at least 70 wt%, of the polymer components) of the PSA layer is a thermoplastic non-crystalline polymer. Here, "non-crystalline polymer" refers to a polymer which does not have a clear melting point Tₘ, and has instead a temperature range in which it softens (glass transition temperature Tg). "Semi-crystalline polymer" refers to a polymer in which both non-crystalline regions and crystalline regions are present and which has both a clear melting point Tₘ and a glass transition temperature Tg.

In a preferred embodiment, the thermoplastic polymer which is the primary component (base polymer) of the PSA layer is a propylene elastomer (propylene copolymer). For example, the base polymer may be given a construction which includes a thermoplastic non-crystalline propylene elastomer and a semi-crystalline propylene elastomer in desired proportions. Alternatively, the base polymer may have a construction which substantially includes only a thermoplastic non-crystalline propylene elastomer. Illustrative examples of commercial thermoplastic propylene elastomers include the Tafthren™ series (non-crystalline) available from Sumitomo Chemical, and the "VISTAMAXX™ series (semi-crystalline) available from Exxon Mobil.

The adhesiveness modifier is a compound having a low compatibility with the base polymer to the extent that the modifier suitably bleeds to the surface of the PSA layer. It is desirable to use an adhesiveness modifier which, compared with cases wherein this compound is not added, is able to suppress (lower) the adhesive strength. The molecular weight of this compound is preferably from about 1×10² to about 1×10⁴. This adhesiveness modifier tends to be located primarily near the surface of the PSA layer (the interfacial area with the adherend), and is able to impart a suitable easy releasability to the PSA layer. If the molecular weight is too large, such bleeding to the PSA layer surface does not readily arise, as a result of which the adhesiveness modifying effect may not be sufficiently achieved. On the other hand, if the molecular weight is too small, migration from the PSA layer surface to the adherend surface readily occurs, which may result in contamination of the adherend. Various kinds of surfactants, such as nonionic surfactants and anionic surfactants, may be advantageously used as the adhesiveness modifiers in the art disclosed herein. Especially preferred surfactants include nonionic surfactants. For example, preferred use may be made of nonionic surfactants having a molecular weight of from about 3×10² to about 7×10² (typically from about 4×10² to about 5×10²). Alternatively various compounds having polyoxyalkylene groups, such as polyoxyethylene groups or polyoxypropylene groups, may be used as the adhesiveness modifier. Such adhesiveness modifiers are preferably added in an amount, based on the solids content, of from 0.01 wt% to 5 wt% (more preferably, from 0.05 wt% to 1 wt%) of the PSA.

Illustrative examples of nonionic surfactants that may be used include nonionic aliphatic compounds having polyoxyalkylene groups, such as fatty amides (which may be amides obtained from hydroxyalkylamines, such as fatty acid monoethanolamides and fatty acid monopropanolamides), aliphatic amines, and polyoxyalkylene glycols (polyalkylene glycols). By way of illustration, polyoxyethylene palm oil fatty acid monoethanolamide, polyoxyethylene stearylamine or polyoxypropylene glycol may be advantageously used. For example, preferred use may be made of polyoxyalkylene glycols having a molecular weight of from about 0.5×10³ to about 7×10³ (typically from about 1×10³ to about 5×10³, such as from about 2×10³ to about 4×10³). Examples of other nonionic surfactants that may be used include polyoxyethylene alkyl ethers, polyoxyethylene alkyl phenyl ethers, polyoxyethylene fatty acid esters and polyoxyethylene-polyoxypropylene block polymers.

Illustrative examples of anionic surfactants include anionic aliphatic compounds which include polyoxyalkylene groups, such as sodium polyoxyethylene alkyl ether sulfate, ammonium polyoxyethylene alkyl phenyl ether sulfate, sodium polyoxyethylene alkyl phenyl ether sulfate and sodium polyoxyethylene alkyl sulfosuccinate. Other examples of anionic surfactants include sodium lauryl sulfate, ammonium lauryl sulfate and sodium dodecylbenzene sulfonate.

Examples of methods that may be used to provide such a PSA layer on the substrate include a method in which a PSA composition having fluidity is directly applied (typically, coated) to the substrate and cured (direct method); and a method in which the PSA layer is formed by applying the above PSA composition to a surface having releasability (release surface) and curing, then laminating this PSA layer onto the substrate and transferring the PSA layer to the substrate (transfer method). Curing treatment may involve one, two or more treatment selected from among, for example, drying (heating), cooling, crosslinking, supplementary copolymerization reactions, and aging. For example, what is referred to herein as the curing treatment encompasses also treatments which consist solely of simply drying a solvent-containing PSA composition (e.g., heating treatment) and treatments which consist solely of simply cooling a PSA composition in a hot molten state (solidification). When curing treatment includes two or more treatments (e.g., drying and crosslinking), these treatments may be carried out at the same time or may be carried out in a plurality of stages. Treatment for forming the PSA layer to a desired thickness may be performed along with the curing treatment. Alternatively, such forming treatment may be performed after the curing treatment.

No particular limitation is imposed on the form of the PSA composition. That is, the PSA composition may be in any of various forms, such as in the form of a solution (i.e., a form obtained by dissolving, in an organic solvent, a polymer obtained by aqueous emulsion polymerization), an emulsion, an aqueous solution, an actinic light (e.g., UV light)-curable form or a hot-melt form. The PSA composition may include one, two or more type of common additive, such as crosslinking agents, tackifiers, viscosity modifiers, leveling agents, plasticizers, antistatic agents, colorants (e.g., dyes, pigments), fillers, stabilizers, preservatives and antioxidants. The amount in which such additives are included may be set, depending on the intended use of the protective sheet (e.g., for masking during plating), to about the same level as the conventional amount included in PSA compositions used to form a PSA layer in this application (i.e., used in protective sheet production).

Another method of providing the PSA layer on the substrate that may be advantageously employed is a method of co-extruding the substrate and the PSA composition (co-extrusion method). Advantages of such a co-extrusion method are its excellent productivity and cost effectiveness. For example, a method which co-extrudes the substrate and the PSA composition (typically in a hot-melt form) by an inflation process or a T-die process is preferred.

The thickness of the PSA layer may be, for example, from about 1 µm to about 100 µm. Generally, it is preferable to set the thickness of the PSA layer to from about 5 µm to about 40 µm (e.g., from about 10 µm to about 20 µm). For example, the above range may be advantageously used as the thickness of the PSA layer in a protective sheet for masking during plating.

Various types of resin films may be employed as the substrate of the protective sheet disclosed herein. For example, in cases where the protective sheet is used for masking during plating, a film composed of a resin material having resistance to what will presumably be the plating solution is preferred. Preferred examples of the resin component making up the substrate include polyolefin resins, polyester resins such as polyethylene terephthalate (PET), polyamide resins (PA), polycarbonate resins (PC), polyurethane resins (PU), ethylene-vinyl acetate resins (EVA) and acrylic resins. One such resin may be used alone as the resin material, or two or more may be blended and used together as the resin material. The substrate may have a single-layer structure or a multilayer structure of two or more layers. In resin films having a multilayer structure, the resin materials making up the respective layers may each contain a single resin or may contain two or more resins (compound resins). The respective resins may be non-crystalline, semi-crystalline or crystalline.

In a preferred embodiment, the substrate is a single-layer or multilayer polyolefin resin film. Here, "polyolefin resin film" refers to a film in which a polyolefin resin (i.e., a resin composed primarily of polyolefin) is used as a primary component among the resin components making up the film. The film may be one in which the resin components are substantially composed of polyolefin resins. Alternatively, the film may be formed of a resin material containing a polyolefin resin as the primary resin component (e.g., a resin component accounting for at least 50 wt%), and additionally containing a resin component other than a polyolefin resin (e.g., PA, PC, PU, EVA). The polyolefin resin used may be a single type of polyolefin alone, or a combination of two or more polyolefins. The polyolefin may be, for example, a homopolymer of an α-olefin, a copolymer of two or more α-olefins, or a copolymer of one, two or more α-olefins with another vinyl monomer. Specific examples include polyethylene (PE), polypropylene (PP), ethylene-propylene copolymers, ethylene-propylene-butene copolymers, ethylene-propylene rubbers (EPR) and ethylene-ethyl acrylate copolymers. Use may be made of both low-density (LD) polyolefins and high-density (HD) polyolefins. The LDPE and HDPE may be blended and used in any desired ratio.

The substrate may optionally include various types of additives, such as light stabilizers (e.g., radical scavengers and ultraviolet absorbers), antioxidants, antistatic agents, colorants (e.g., dyes, pigments), fillers, slips agents, and anti-blocking agents. The loadings of these various additives may be suitably selected according to the intended use of the protective sheet (e.g., for masking during plating).

The substrate may be manufactured by suitably employing an ordinary known film-forming process (e.g., extrusion, inflation). The surface of the substrate where the PSA layer is provided may be subjected to treatment for enhancing adhesion with the PSA layer, such as corona discharge treatment, acid treatment, ultraviolet irradiation treatment, plasma treatment, or primer coating. The back face of the substrate on the side opposite from the PSA layer side may be optionally subjected to antistatic treatment, release treatment or the like.

The thickness of the substrate may be suitably selected according to, for example, the intended use of the protective sheet. For instance, a substrate having a thickness of from about 10 µm to about 80 µm may be used. The use of a substrate having a thickness of from about 10 µm to about 70 µm (e.g., from 10 µm to 50 µm) is generally appropriate. The art disclosed herein may also be suitably applied to protective sheets having a substrate thickness of less than 40 µm (typically, 10 µm or more but less than 40 µm e.g., about 25 µm to about 38 µm). This may also be suitably applied to protective sheets (for example, protective sheets for masking during plating) having a substrate thickness of from about 20 µm to about 60 µm (e.g., from 30 µm to 60 µm).

In a preferred embodiment of the protective sheet, when E1 represents a tensile modulus of the protective sheet at 80°C in a first direction (typically the lengthwise direction, or machine direction (MD), of the substrate) and E2 represents a tensile modulus of the protective sheet at 80°C in a direction perpendicular to the first direction (typically the width direction, or transverse direction (TD), of the substrate), the sum E_{T} of E1 and E2 is from 5 MPa to 300 MPa. As used herein, the "tensile modulus" of the protective sheet refers to a value with respect to the cross-sectional area of the substrate. The cross-sectional area of the substrate may be calculated from the thickness of the substrate, and the thickness of the substrate may be determined by subtracting the thickness of the PSA layer from the measured thickness of the protective sheet. Typically, because the PSA layer has a very small modulus of elasticity compared with the modulus of elasticity of the substrate, the modulus of elasticity of the protective sheet is substantially the same as the modulus of elasticity of the substrate. Therefore, by selecting the substrate such that the sum E_{SubT} of the tensile modulus in the first direction (e.g., MD) at 80°C and the tensile modulus in the transverse direction (e.g., TD) at 80°C (i.e., the total tensile modulus at 80°C of the substrate) falls in the above range in E_{T}, a protective sheet for which E_{T} is in the above range can be efficiently achieved. Measurement of the tensile modulus is carried out in accordance with JIS K7161, using test specimens in the form of 10 mm wide strips. With such a substrate, when the protective sheet is attached to an adherend and peeled from the adherend, excessive stretch does not readily arise, enabling a protective sheet of excellent handleability to be efficiently achieved.

The protective sheet disclosed herein may be in a form wherein a release liner is disposed on the PSA layer surface (the PSA side, i.e., the surface on the side of the protective sheet which will be attached to the object to be protected). A protective sheet in such a form (a protective sheet with release liner) may be advantageously employed as a protective sheet for masking during a plating operation. This is because, generally, when the protective sheet for masking during plating is punched in a shape that corresponds to the masking region (that is, the region to be protected) and is attached to an adherend, a protective sheet in a form having a release liner on a PSA layer (that is, a protective sheet with release liner) enables the punching operation to be efficiently carried out. After the protective sheet with release liner has been punched, it is used by peeling the release liner from the protective sheet so as to expose the PSA side, then pressure bonding the PSA side to the adherend.

Various types of paper (which may be paper to the surface of which a resin has been laminated), plastic films and the like may be used without particular limitation as the release liner. In cases where a plastic film is used as the release liner, preferred examples of the resin component making up the plastic film include polyolefin resins, polyester resins (e.g., PET), polyamide resins, polycarbonate resins and polyurethane resins. The plastic film may be one composed of a resin material which includes one such type of resin alone, or may be a plastic film composed of a resin material blended from two or more resins (e.g., polyethylene and polypropylene). The plastic film may have a single-layer structure or a multilayer structure of two or more layers. As with the plastic film serving as the substrate, such plastic films for the release liner may be produced by suitably employing a common film-forming method.

The thickness of the release liner is not subject to any particular limitation and may be, for example, from about 5 µm to about 500 µm (and preferably from about 10 µm to about 200 µm, such as from about 30 µm to about 200 µm). The release side of the release liner (the side situated in contact with the PSA side) may optionally be subjected to release treatment with a known release agent (e.g., a common silicone, long-chain alkyl or fluorocarbon release agent). The back side (opposite from the release side) of the release liner may or may not be release-treated, and may be subjected to a surface treatment other than release treatment.

The protective sheet disclosed herein is suitable as a protective sheet for masking in a plating operation. For example, when a metal (typically a metal having a high electrical conductivity, such as gold or nickel) is plated (e.g., electroplated) onto portions of a workpiece, the protective sheet may be advantageously used in applications where it is attached to non-plating areas and protects those non-plating areas from the plating solution. Such a protective sheet for masking during plating may be advantageously used in operations wherein portions (e.g., connection terminal areas) of a circuit board (e.g., a printed circuit board or FPC) are partially plated. Because the protective sheet according to this invention has a good adherence, infiltration of the plating solution into non-plating areas is suppressed, enabling plating to be precisely applied. For example, in the adherence test described in the subsequent examples, the protective sheet can exhibit high adherence that does not allow the presence of a gap. The protective sheet disclosed herein has an excellent handleability. For example, the ease of operation is good when the protective sheet is attached to non-plating areas, or when the protective sheet is peeled following plating. Therefore, by using the protective sheet according to the present invention to carry out masking in a plating operation, high-quality circuit boards can be manufactured efficiently.
The protective sheet according to this invention is not limited to applications in which, as described above, areas which are not to be metal plated are protected from the plating solution, and may also be advantageously used in such applications as, for example, protecting (masking) a non-patterned side from the processing solution (etching processing solution, for example) in a circuit patterning operation.

### EXAMPLES

Several experimental examples of the invention are described below, although these specific examples are not intended to limit the scope of the invention. In the description that follows, unless noted otherwise, all references to "parts" and "%" are based on weight.

### Production of Protective Sheet

### Example 1

An inflation technique which co-extrudes a substrate and a PSA composition was used to produce a PSA sheet having a 15 µm thick PSA layer provided on the second layer side of a substrate with a two-layer structure composed of a 5 µm thick first layer (back side layer) and a 50 µm thick second layer. The melting temperatures were set at 160°C for the first layer, 170°C for the second layer, and 190°C for the PSA layer. The die temperature was set to 180°C.
The first layer (back side layer) of the substrate was formed from 70 parts of a low-density polyethylene (LDPE) (available from Tosoh Corporation under the trade name "Petrocene 209") and 30 parts of an ethylene-vinyl acetate copolymer (EVA) (available from DuPont-Mitsui Polychemicals Co., Ltd. under the trade name "EV 270").
The second layer of the substrate was formed from 70 parts of LDPE (available from Japan Polyethylene Corporation under the trade name "Novatec LL UF440") and 30 parts of high-density polyethylene (HDPE) (available from Japan Polyethylene Corporation under the trade name "Novatec HD HF560").
The PSA layer was formed from 75 parts of a special propylene elastomer (available from Sumitomo Chemical under the trade name "Tafthren H5002"; MFR, 10 g/10 min), 25 parts of a special propylene elastomer (available from Exxon Mobil under the trade name "VISTAMAXX VM6202"; MFR, 18 g/10 min) and, as an additive, 0.5 part of the nonionic surfactant available from Kawaken Fine Chemicals under the trade name "Amizet 5C" (polyoxyethylene (5) palm oil fatty acid monoethanolamide; molecular weight, 475.8).
The release side of a release liner was bonded to the PSA layer of the resulting PSA sheet, thereby giving a protective sheet according to this example. The release liner used was composed of 115 µm thick high-quality paper laminated on each side with a 20 µm thick PE layer, and having a silicone release agent applied to one side thereof (the release side).

### Example 2

A 35 µm film (PP/PE/EPR film) was produced as the substrate from a PP/PE/EPR blend obtained by extruding 80 parts of PP (40 parts of crystalline homopolypropylene (HPP) having a resin density of 0.905/40 parts of a random polypropylene (RPP) having a resin density of 0.900), 10 parts of PE (available from Tosoh Corporation under the trade name "Petrocene 205") and 10 parts of EPR (available from Mitsui Chemicals, Inc. under the trade name "Tafmer P0180") by the T-die method.
A PSA composition was prepared by mixing 100 parts of a special propylene elastomer (trade name, "Tafthren H5002") and 0.5 part of the same additive as in Example 1 (trade name, "Amizet 5C"), then adding toluene to a coatable viscosity. The composition was applied to one side of the PP/PE/EPR film and dried at 80°C for 1 minute to form a PSA layer having a thickness of about 15 µm. The silicone release-treated side of the PET film (available from Mitsubishi Polyester Film under the trade name "Diafoil MRF25") was bonded to this PSA layer, which was then held at 50°C for 2 days, following which the PET film was peeled off and a release liner was bonded to the PSA layer in the same way as in Example 1, thereby giving a protective sheet according to this example.

### Example 3

Instead of Amizet 5C, 0.5 part of the nonionic surfactant available from NOF Corporation under the trade name "Nymeen S-204" (polyoxyethylene stearylamine; molecular weight, 445.7) was used as the additive included in the PSA composition. Aside from this, a protective sheet according to this example was obtained in the same way as in Example 2.

### Example 4

A PE film having a thickness of 40 µm was produced by forming LDPE (available from Tosoh Corporation under the trade name "Petrocene 180") into a film with a blown-film extruder at a die temperature of 160°C.
Aside from using this PE film as the substrate layer and using 0.5 part of the nonionic surfactant available from Sanyo Chemical Industries, Ltd. under the trade name "Sannix PP-3000" (polyoxypropylene glycol; molecular weight, 3000) instead of Amizet 5C, a protective sheet according to this example was obtained in the same way as in Example 2.

### Example 5

Aside from not adding an additive to the PSA, a protective sheet according to this example was obtained in the same way as in Example 1.

### Example 6

Aside from not adding an additive to the PSA, a protective sheet according to this example was obtained in the same way as in Example 2.

### Example 7

Aside from not providing a back side layer, forming a substrate with a single-layer structure having a thickness of 36 µm from LDPE (available from Mitsui Oil Co., Ltd. under the trade name "Mirason 67"), and forming a 24 µm thick PSA layer from EVA (available from DuPont-Mitsui Polychemicals Co., Ltd. under the trade name "EV550"; MFR, 15 g/10 min), the substrate and the PSA compositions were co-extruded by an inflation technique under the same conditions as in Example 1 to produce a PSA sheet. Using this PSA sheet, a protective sheet according to this example was obtained in the same way as in Example 1.

### Example 8

A reaction vessel equipped with a condenser, nitrogen inlet, thermometer and stirrer was charged with 33 parts of methyl methacrylate, 3 parts of 2-hydroxyethyl methacrylate, 64 parts of butyl acrylate, 0.1 part of 2,2'-azobis(2-amidinopropane) dihydrochloride as a polymerization initiator, 1.5 parts of sodium dodecylbenzene sulfonate as an emulsifying agent and 100 parts of water, and emulsion polymerization was carried out at 80°C for 5 hours. Following the completion of polymerization, 15% ammonia water was added to the reaction mixture so as to adjust the pH to 7.0, thereby giving an acrylic copolymer emulsion having a nonvolatiles content of 50%
Hydrochloric acid was added to this emulsion to effect salting out, and the resulting coagulate was rinsed with water and dried, thereby giving an acrylic copolymer. This acrylic copolymer was dissolved in toluene to form a solution, and 5 parts of an isocyanate crosslinking agent (available from Nippon Polyurethane Industry Co., Ltd. under the trade name "Coronate L") was added thereto per 100 parts of the copolymer. In addition, the solution was adjusted with toluene to a specific nonvolatiles content, thereby giving a PSA composition.
The HPP used in Example 2 and the compound resin of RPP and this HPP in Example 2 (weight ratio, RPP : HPP =1:1) were extruded from a T-die so as to give a three-layer structure composed of the above compound resin between layers of the above HPP (the three layers having the thickness ratio HPP : compound resin : HPP = 1:3:1) and having a thickness of 40 µm, and corona discharge treatment was applied to one side thereof. This PP film with a three-layer structure had a modulus of elasticity in the machine direction at room temperature of 477.2 MPa, and a modulus of elasticity in the transverse direction at room temperature of 472.2 MPa. The above acrylic PSA composition was coated onto the corona-treated side of a first substrate and dried at 80°C for 1 minute to form a PSA layer having a thickness of about 15 µm. The untreated side of a second substrate was bonded to this PSA layer and aging carried out for 2 days (48 hours) at 50°C, following which the second substrate was removed. A release liner was bonded in the same way as in Example 1 to the exposed PSA layer, thereby giving a protective sheet according to this example.

The following tests were carried out on the protective sheets according to the respective examples. The results are shown in Table 1 together with details such as the compositions in each example. In cases where an additive was used, the molecular weight of that additive is shown.

### Tensile Modulus

The tensile moduli E1 and E2 in the machine direction and the transverse direction of the protective sheet obtained in each example were measured, and the sum E_{T} (MPa) of E1 and E2 was calculated. E1 and E2 were determined as values with respect to the cross-sectional area of the substrate, based on the thickness value (substrate thickness) obtained by subtracting the thickness of the PSA layer from the measured thickness of the protective sheet.
Test pieces were prepared by cutting each substrate along the lengthwise direction (MD) in the shape of a strip having a width of 10 mm. The test piece was stretched under the following conditions in accordance with JIS K7161, thereby giving a stress-strain curve.
Measurement temperature: 80°C
Test piece width: 10 mm
Test rate: 300 mm/min
Chuck interval: 50 mm
The MD tensile modulus E1 was determined by the linear regression of the curve between two specified points: the strains ε₁ = 1 and ε₂ = 2. The above measurements were carried out using three test pieces cut from different places, and the average of these measurements was treated as the tensile modulus E1 (MPa) in the lengthwise direction (MD) at 80°C.
Test pieces were prepared by cutting each substrate along the widthwise direction (TD) in the shape of a strip having a width of 10 mm, and the tensile modulus E2 (MPa) in the widthwise direction (TD) at 80°C was determined in the same way as above.
These results are shown in Table 1 together with the sum E_{T} (MPa).

### Adherence

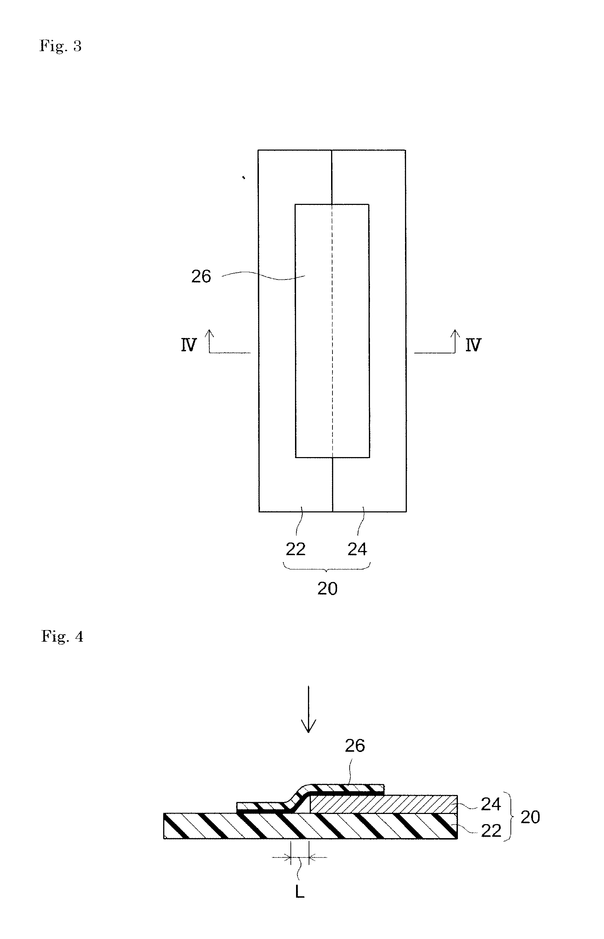

Assuming use in the manner of a protective sheet (protective sheet for masking in a plating operation) employed when plating a flexible printed circuit board (FPC), the adherence to steps (step conformability) between the FPC wiring (typically, copper wires) and the base film was evaluated.
A board 20 was fabricated as shown in FIGS. 3 and 4 by bonding a 20 mm x 100 mm copper foil 24 having a thickness of 35 µm to one side of a 40 mm x 100 mm PI film 22 (available from Toray Industries, Inc. under the trade name "Kapton 200H") so as to cover one-half of the surface area on one side of the PI film 22 along the lengthwise direction thereof. A test piece 26 of the respective protective sheets which had been cut to a size of 20 mm x 70 mm and from which the release liner had been removed was positioned on the board 20 so that substantially the center of the width coincided with the boundary between the PI film 22 and the copper foil 24, and was lightly bonded to the board 20 with a hand roller. In the same way as described below when measuring the adhesive strength when heat and pressure bonded, the board 20 with the test piece 26 thereon was placed between release-treated PET films, and sandwiched in this manner between rubber sheets. The resulting assembly was then arranged with the protective sheet side facing up, and pressed from above the rubber sheet at a temperature of 120°C and a pressure of 0.34 MPa for a pressing time of 5 seconds. After pressing, the vicinity of the boundary between the PI film 22 and the copper foil 24 of the board 20 to which the test piece 26 had been attached was examined from directly above (in the direction of the arrow in FIG. 4; that is, in a direction perpendicular to the surface of the board) to determine whether or not there was a gap (an area where the PSA face of the test piece 26 lifts from the surface of the board 20) at the step between the copper foil 24 and the PI film 22. If there was a gap, the length L of the gap was measured (FIG. 4). Confirmation of the gap was carried out at a magnification of 100X using a digital microscope manufactured by Keyence Corporation. Measurement of the length L was carried out at places 10 mm, 35 mm and 60 mm from one end of the test piece 26 in the lengthwise direction, and the average of the measurements at these three points was calculated. Based on these results, the adherence of each protective sheet was rated as follows.
Good: No gap was observed (gap length is indicated in Table 1 as 0 µm).
NG: A gap was observed (measured gap length is indicated in Table 1).

### Adhesive Strength When Heat and Pressure Bonded (PS_{HP})

The adhesive strength PS_{HP} when heat and pressure bonded was measured as described above for each protective sheet.
In each case, an adherend having a protective sheet attached thereto was sandwiched between PET films (with the release-treated face on the inside), and both sides thereof were in turn sandwiched between the above-mentioned rubber sheets so as to keep the protective sheet from sticking to the rubber sheets during hot pressing. The PET films used were two pieces of PET film available from Mitsubishi Polyester Film under the trade name "Diafoil MRF38," each of which had been release-treated with silicone on one side and cut to a size of 40 mm x 100 mm. The rubber sheets used were two pieces of 1.0 mm thick natural rubber (NBR) cut to the same size as the PET films. The measurement results in each case were rated as follows.
Good: PS_{HP} was in a range of 0.05 N/10 mm to 1.0 N/10 mm.
NG: PS_{HP} was less than 0.05 N/10 mm or more than 1.0 N/10 mm.

### Initial Adhesive Strength (PS_{I})

The initial adhesive strength (adhesive strength when temporarily attached) PS_{I} was measured as described above for each protective sheet.
The PSA layer (thickness, about 25 µm) of the adherend was formed by applying, to one side of a polyimide (PI) film (available from DuPont-Toray Co., Ltd. under the trade name "Kapton 200H"), a PSA composition prepared by diluting the above-described resin components with ethyl acetate to a predetermined nonvolatiles concentration, and drying the applied composition at 100°C for 3 minutes. The measured results in each example were rated as follows.
Good: PS_{I} was in a range of 0.03 N/10 mm to 1.0 N/10 mm.
NG: PS_{I} was less than 0.03 N/10 mm or more than 1.0 N/10 mm.

**Table 1**

| Example | | 1 | 2 | 3 | 4 | 5 | 6 | 7 | 8 |
|---|---|---|---|---|---|---|---|---|---|
| Substrate | Material | L/HPE | PP | PP | PE | L/HPE | PP | PE | PP |
| | Thickness (µm) | 55 | 35 | 35 | 40 | 55 | 35 | 36 | 40 |
| PSA layer | Additive, MW | 475.8 | 475.8 | 445.7 | 3000 | -- | -- | -- | -- |
| | Thickness (µm) | 15 | 15 | 15 | 15 | 15 | 15 | 24 | 15 |
| E1 (MPa) | | 49.7 | 131.9 | 131.9 | 57.1 | 49.7 | 131.9 | 23.2 | 107.8 |
| E2 (MPa) | | 75.8 | 138.2 | 138.2 | 55.8 | 75.8 | 138.2 | 24.3 | 107.8 |
| E_{T} (MPa) | | 125.5 | 270.1 | 270.1 | 112.9 | 125.5 | 270.1 | 47.5 | 215.6 |
| Gap length (µm) | | 0 | 0 | 0 | 0 | 0 | 0 | 0 | 369.5 |
| Adherence | | good | good | good | good | good | good | good | NG |
| PS_{HP} when heat/pressure bonded (N/10 mm) | | 0.10 | 0.17 | 0.29 | 0.33 | 1.29 | 4.35 | 4.49 | 0.95 |
| Easy releasability | | good | good | good | good | NG | NG | NG | good |
| Initial PS_{I} (N/10 mm) | | 0.38 | 0.47 | 0.52 | 0.58 | 4.68 | 0.47 | 0.02 | 0.30 |
| Temporary attachability | | good | good | good | good | NG | good | NG | good |

| | | | | | | | | | |
|---|---|---|---|---|---|---|---|---|---|
| L/HPE: LDPE/HDPE | | | | | | | | | |

As shown in Table 1, the protective sheets in Examples 1 to 4, which had a thermoplastic PSA layer and PS_{HP} values in a range of from 0.05 N/10 mm to 1.0 N/10 mm, all exhibited a high adherence which conformed to the topography of the adherend surface without gaps, and also had a good easy releasability when heat and pressure bonded. In addition, the protective sheets in Examples 1 to 4 all exhibited an excellent temporary attachability.
By contrast, the protective sheets in Examples 5 to 7, wherein the PSA layers were thermoplastic but the PS_{HP} values fell outside of the above range, had a good adherence, but had an easy releasability when heat and pressure bonded that was inadequate. Moreover, the protective sheet in Example 8, which had a PS_{HP} value in the above range but a PSA layer that was non-thermoplastic, had a good easy releasability when heat and pressure bonded, but an inadequate adherence. In addition, the protective sheets in each of Examples 5 and 7 also had an inadequate temporary attachability.

The embodiments thus disclosed in detail above are to be considered in all respects as illustrative and not limiting. The scope of the invention is indicated by the appended claims rather than by the foregoing description, and all changes which come within the meaning and range of equivalency of the claims are intended to be embraced therein.

## Claims

1. A protective sheet, comprising:
a substrate; and
a pressure-sensitive adhesive layer which is provided on one side of the substrate,
**characterized in that** the pressure-sensitive layer is thermoplastic, and
when the protective sheet is pressure bonded to a polyimide film at a temperature of 120°C and a pressure of 0.34 MPa for a pressing time of 5 seconds, the protective sheet has a peel strength PS_{HP}, as measured by peeling the protective sheet from the polyimide film at a temperature of 25°C, a peel rate of 5 m/min and a peel angle of 180°, of from 0.05 N/10 mm to 1.0 N/10 mm.

2. The protective sheet according to claim 1, **characterized in that** the pressure-sensitive adhesive layer includes, as a primary component, a thermoplastic polymer and includes also an adhesiveness modifier.

3. The protective sheet according to claim 2, **characterized in that** the thermoplastic polymer is a propylene elastomer.

4. The protective sheet according to claim 3, **characterized in that** the thermoplastic polymer is a propylene elastomer which has a melt mass flow rate, as measured in accordance with ASTM D1238, test method A, at 230°C and under a load of 2.16 kg, of from 5 g/10 min to 30 g/10 min.

5. The protective sheet according to any one of claims 2 to 4, **characterized in that** the adhesiveness modifier is a nonionic surfactant.

6. The protective sheet according to any one of claims 2 to 4, **characterized in that** the pressure-sensitive adhesive layer includes from 0.05 wt% to 1 wt% of the adhesiveness modifier, and the adhesiveness modifier is at least one selected from the group consisting of polyoxyalkylene fatty acid monoethanolamides having a molecular weight of from 4×10² to 5×10², polyoxyalkylene fatty acid amines having a molecular weight of from 4×10² to 5×10² and polyoxyalkylene glycols having a molecular weight of from 2×10³ to 4×10³_{.}

7. The protective sheet according to any one of claims 1 to 6, **characterized in that** when the protective sheet is placed on an evaluation adherend in a 25°C environment, lightly bonded thereto by passing a hand roller once back and forth over the protective sheet, and then held at 25°C for one hour, the protective sheet has a peel strength PS₁, as measured by peeling the protective sheet from the adherend at a peel rate of 300 m/min and a peel angle of 180°, of from 0.03 N/10 mm to 1.0 N/10 mm.

8. The protective sheet according to any one of claims 1 to 7, **characterized in that** when E1 represents a tensile modulus of the protective sheet at 80°C in a first direction and E2 represents a tensile modulus of the protective sheet at 80°C in a direction perpendicular to the first direction, a sum E_{T} of E1 and E2 is from 5 MPa to 300 MPa.

9. The protective sheet according to any one of claims 1 to 8, **characterized in that** the substrate has a thickness of from 30 µm to 60 µm, and the pressure-sensitive adhesive layer has a thickness of from 10 µm to 20 µm.

10. The protective sheet according to any one of claims 1 to 9, which is a protective sheet for masking during plating and is attached to a non-plating area during metal plating so as to protect the non-plating area from a plating solution.

11. Use of the protective sheet according to any one of claims 1 to 9, as a protective sheet for masking during plating, which is attached to a non-plating area during metal plating so as to protect the non-plating area from a plating solution.
